# EUROPEAN PATENT APPLICATION

(11) **EP 1 460 428 A1**
(43) Date of publication of application: **22.09.2004**
(21) Application number: 04006328.1
(22) Date of filing: 17.03.2004
(51) Int. Cl.: G01N 35/00

(54) **Modular medical analyzer**

(30) Priority: 21.03.2003 IT MI20030550
(71) Applicant: Delta Biologicals S.r.l., 00040 Pomezia (Roma) (IT)
(72) Inventor: Furino, Silvio, 80055 Portici (Napoli) (IT); Cossi, Mario, 00125 Roma (IT); D'Urso, Giulio, 00040 Castel Gandolfo Roma (IT)
(74) Representative: Mayer, Hans Benno, Dipl.-Ing.

(57) **Abstract**

A machine for performing medical analysis made up of individual modules consisting of containers that are suitable for receiving or holding accessories for the purpose of conducting medical analysis; that the individual containers have with respect to the side walls tracks on which rest respectively the sliding rollers that provide reciprocal movement of the individual modules; that each module has inside a conveyor belt that is arranged horizontally as well as one or two support levels to receive the holders containing the samples and the components to be analyzed; that the walls of the modules that are supported among each other present in relation to the conveyor belts openings between the adjacent modules and that inside each of the modules a robot-type arm is provided that can be equipped with interchangeable accessories to act on the contents of the support, for instance to grasp, to dispense, to suck, to measure and move in a controlled manner the supports that are holding the samples.

## Description

This invention involves a modular machine for conducting medical analysis, such as for instance, blood analysis, not excluding however, the analysis of urine, feces and human tissue.

From the previous technological state-of-the-art is known a device used for conducting medical analysis. In this well-known device, that consists substantially of a shell closed off on one or more sides by a door and placed for instance on a table, the samples to be analyzed are inserted. These samples to be analyzed are contained in several small cells made in a suitable container.

Inside this well-known device for conducting the analysis tasks requested, various movable and interchangeable probes are located which, in a very well-known manner, take small samples that will be analyzed immediately.

The well-known analysis devices have shown to be valid as far as reliability and accuracy of analysis are concerned, but it has been found that these known devices, once installed, do not permit making changes or modifications to functional groups such as, for instance, to conduct analysis operations that were unforeseen before the design and the implementation of the device. Moreover, in case of intermittent damage to said devices for analysis, it will be necessary to stop the operation of the device as a whole, to permit a repair, so that the ambulatory technician or the laboratory will not be able to conduct further medical analyses for the duration of the repair.

Another typical inconvenience for analysis equipment of the type indicated is to recognize the fact that the device is designed and built to perform specific types of analysis and consequently, a device of this type does not permit modifications that would make other types of analysis possible.

In addition, the well-known devices, being substantially of the closed types, operate at a certain velocity and as such it is not possible to comply with requests to increase the number of complex analyses or within a unit-of-time frame, a fact which requires the acquisition of other analysis devices or equipment.

It is the purpose of this invention to do away with the inconveniences associated with the previous technological state-of-the-art and to propose a device or equipment that permit performing various types of analysis at the same time; that also permits a rapid replacement of damaged devices in particular, without having to shut down the operation during repair and that permits easy adaptation to miscellaneous technological requirements and methods, either present or future, as well as an increasing number of requests for analysis and general velocity of performance.

Such purpose is achieved by the fact that the device that performs medical analysis designed according to the invention is composed of individual modules that are independent one from the other, consisting of suitable containers to hold devices that will perform various types of medical analysis, that the individual containers present, with respect to the side walls, sliding tracks and sliding rollers that permit a reciprocal transfer and movement of the individual modules, that each module has inside a conveyor belt that is positioned horizontally and also one or several support levels for the holders containing the samples and the components to be analyzed, that the walls of the modules supported among each other have openings or passages with respect to the conveyor belts and that inside each module there is a robot-type arm, suitable to grasp and move the samples in a controlled manner.

When having a device or equipment for analysis consisting of several specific and individual modules, it becomes possible to substitute defective devices, expand the equipment with the addition of more modules, thus increasing productivity of the device for medical analysis in accordance with specific requirements.

The purpose designed according to this invention will be described now in greater detail and will be illustrated in a form of execution that is provided only as an example in the attached drawings, in which
figure 1 shows a front view diagram of three modular containers assembled to produce a combined diagnostic device;
figure 2 shows a sectional and enlarged scaled view of a guiding device with two adjacent walls;
figure 3 shows schematically three modules without the front door, with the individual handling devices and the individual conveyors belts;
figure 4 shows schematically, as a front view without front door, a module that operates as storage, with a lifting device to remove and deposit containers on to the conveyor belt;
figure 5 shows schematically as a front view a module without front door that is holding containers for the distribution of additional fluids;
figure 6 shows schematically, as plan view, the modules mentioned in figure 1, assembled one to the other.

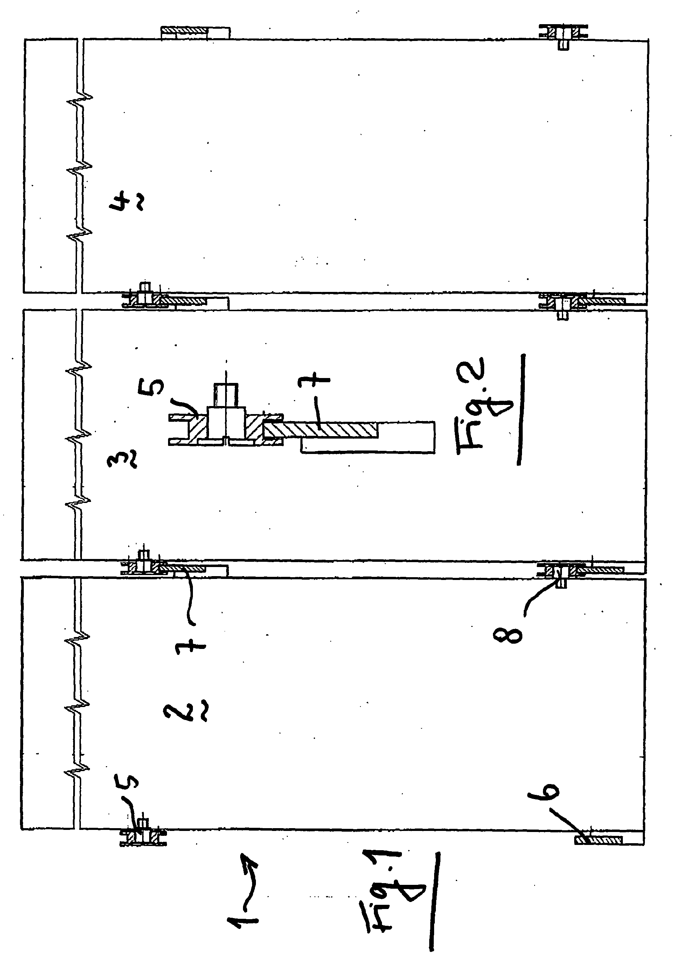

As can be observed from figure 1, the device for performing medical analysis, identified overall by 1, is made up of containers or receptacles, 2, 3, and 4, as modules that can be integrated and combined freely among themselves.

Each wall of modules 2, 3 and 4 turned towards the left side on the drawing shows on top a grooved sliding wheel 5 and below a guide 6 consisting of a flat strip.

The right wall of each container, as illustrated in figure 1, presents on top a guide 7 consisting of a flat strip and below a grooved sliding wheel 8.

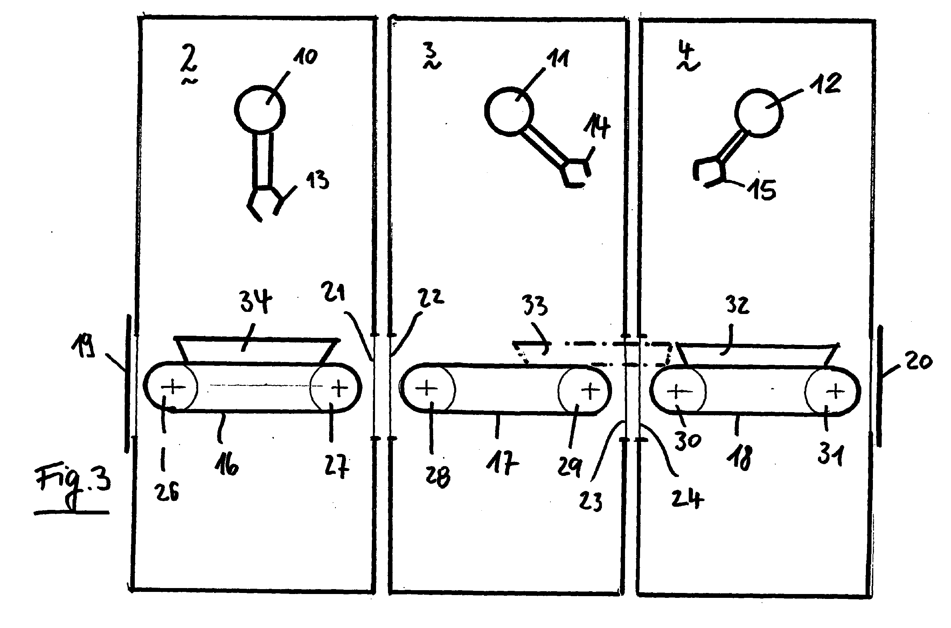

Sliding guide 7 and grooved wheel 5 are illustrated in greater detail in figure 2.

Thanks to the coupling between guides 6 and 7 with grooved wheels 5 and 8, it is possible to make an independent transfer of modular containers 2, 3 and 4, thus enabling the extraction of one or the other of modules 2, 3, 4 to permit inspection, control or replacement of a container or receptacle.

Figure 3 shows a schematic illustration of modules 2, 3 and 4 seen from the front and without front doors.

It is observed that each container 2, 3 and 4 has a robot-type arm 10, 11 or 12 inside.

Each arm 10, 11, 12 is equipped with controllable tongs 13, 14, or 15 in order to use interchangeable accessories for the purpose of acting on the contents of the holders, such as for instance, but not exclusively, grasping, dispensing, sucking, measuring.

Each arm 10, 11, 12 can be moved in a controlled way in a horizontal plane, in a vertical plane and in addition, it can make rotating movements.

All movements of arms 10, 11 and 12 are beneficially governed by a digital control unit that is part of machine 1.

In the bottom area, each module 2, 3 and 4 holds inside a conveyor belt 16, 17 and 18 laid out in a horizontal plane.

The walls that delimit modules 2, 3 and 4 show, in relation to belts 16, 17, and 18, openings that can be closed off with doors 19 and 20, which can be removed in case of need.

Thanks to the removable doors, it will be possible to free up openings 21, 22, 23 and 24 provided in relation to the ends of belts 16, 17 and respectively 17 and 18.

Conveyors belts 16, 17, 18 are supported by drive rollers identified as 26, 27; 28, 29, 30, 31. One of the rollers of each belt 16, 17, 18 is hooked up to a drive motor, controlled through a digital control system of the machine.

The belts are provided for transporting the known containers 32, 33 and 34 containing or holding the plates (not shown) or the containers that are holding the samples to be analyzed.

In figure 3, operating modules 2, 3, 4 are scheduled to be used directly for performing the various types of analysis.

The devices for the analyses are well-known and therefore not illustrated in detail.

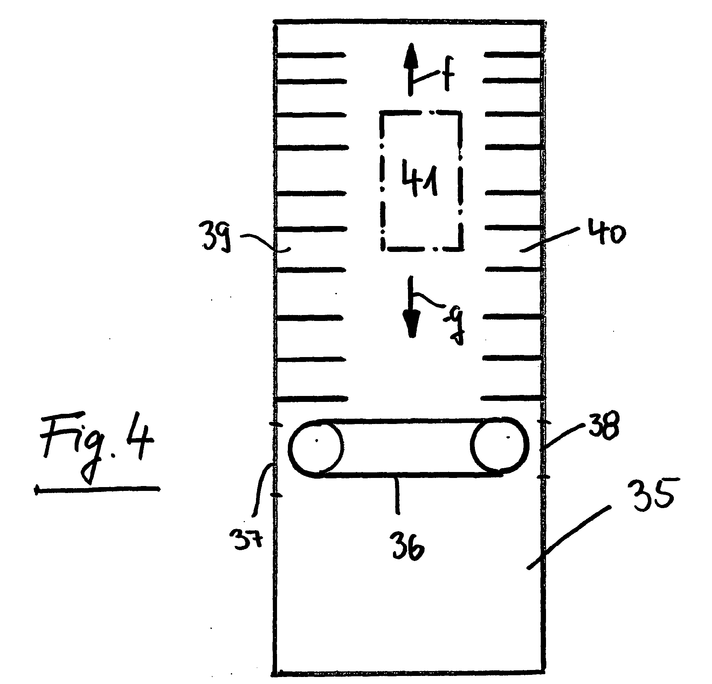

In figure 4, a module 35 is illustrated from which the front door has been removed. Inside module 35, a conveyor belt is provided, indicated as a whole by 36 and made in an identical fashion as the conveyor belts described before.

Also with respect to conveyor belt 36, the side walls of module 35 show openings 37 and 38 that are closed but can be opened in case of need to permit the free passage of containers for the samples to be analyzed.

Inside module 35, shelves 39,40 are arranged vertically. Each shelf 39, 40 can receive containers or plates for the samples to be analyzed to be inserted from the outside. The individual containers or the individual plates can have a recognition code such as, for instance, a bar code, to permit identification of the individual samples before they are sent to modules 2, 3, 4 for analysis.

Inside module 35, there is also a lifting device 41 for movement up or down as indicated schematically by arrows g, permitting removal of the plates or the containers from shelves 39 and 40 to put them down onto belt 36.

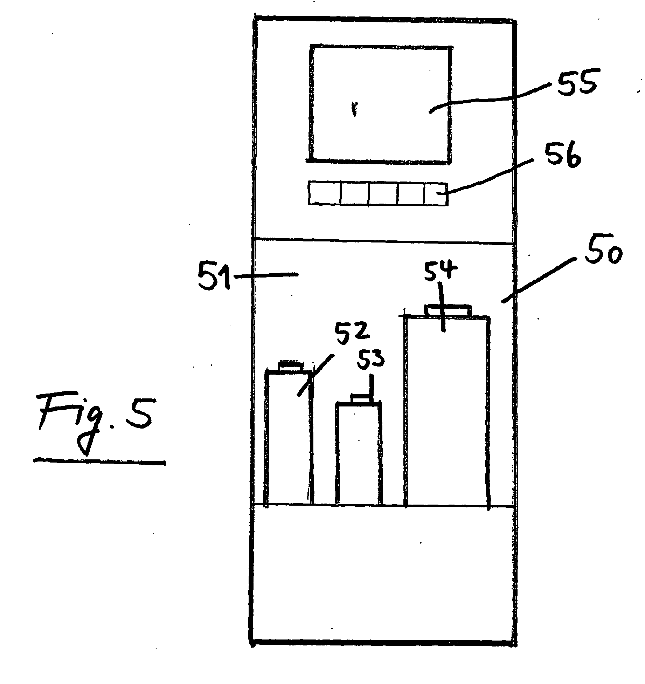

A last module 50 is illustrated in figure 5.

This module presents a chamber 51, for instance for holding spare containers 52, 53 and 54 that contain liquids such as for instance, thinners, detergents or other substances for treatment or for the samples to be analyzed and for the well-known cells made in the plates.

Obviously, to the containers 52, 53 and 54 are connected auxiliary means that are not illustrated, such as for instance pumps, small compressors or ventilation devices necessary for operating a medical analysis device in accordance with this invention.

Moreover, module 50 or any other module 2, 3, 4 or 35 is outfitted with a monitor 55 that is an integral part of a small computer, not illustrated; also in combination with monitor 50, it is beneficial to provide for a keyboard 56 that permits inputting operating orders or instructions into the system, and receiving the results of the analyses conducted with procedures known themselves by the technology.

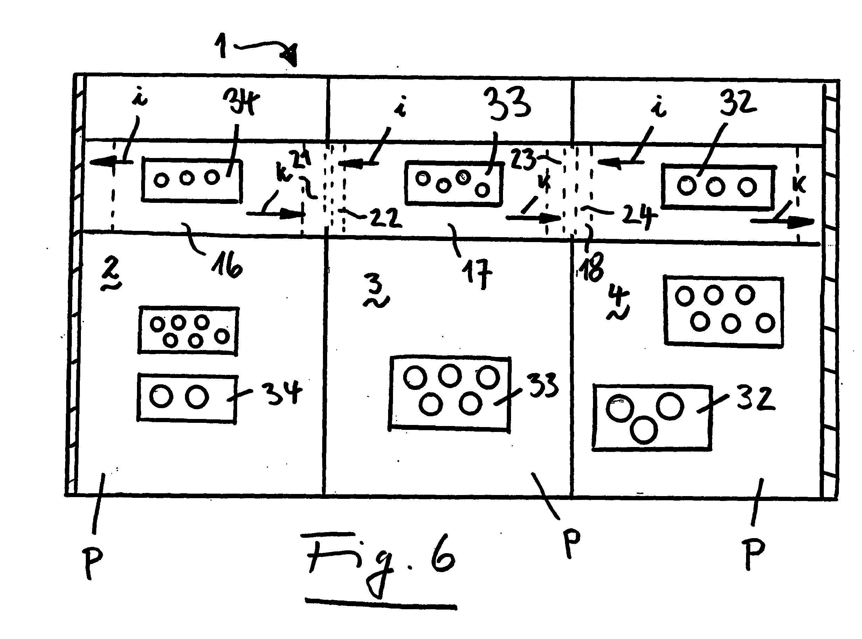

Figure 6 shows a plan view of assembled modules 2, 3, 4 that form an example of a device 1 that is combined and made up of individual modules for the desired analyses.

Obviously, modules 2, 3, 4 and 50 can be combined freely and also many of the various specific modules can be applied in combination which shall be determined by the specific laboratory requirements. In the event of expanding device 1, it will not be necessary to purchase new equipment; it will suffice to add other specific modules to the existing ones. In the event of repairs, it suffices to replace the damaged module with an operating module.

Figure 6 illustrates three modules 2, 3, 4 that are combined with each other. In the back or in the front of modules 2, 3, 4 doors that can be opened or removed are provided; for reasons of clarity, the doors are not illustrated in figure 6.

Clearly, one observes that each module 2, 3, 4 shows a conveyor belt 16, 17, 18 laid out horizontally. Each belt can be activated in a controlled fashion as indicated schematically by arrows (i) and (k), thus permitting a controlled transportation of containers 32, 33 and 34 through openings 21, 22, 23 and 24 provided among individual modules 2, 3 and 4.

At the same level of belts 16, 17, and 18 near the front of modules 2, 3 and 4, supporting shelves identified by reference P are provided.

On these shelves P, with the help of handling devices 10, 11 and 12, containers 34, 33 and 32 are positioned into the various modules 2, 3 and 4 to permit conducting a specific analysis in module 2, 3 or 4 on samples present in containers 34, 33 and 32.

## Claims

1. A machine (1) to perform medical analyses, **characterized by** the fact that it consists of independent modules (2, 3, 4, 35) made up of containers appropriate for receiving or holding equipment for performing medical analyses, that the independent modules (2, 3, 4, 35) present with relation to the side wall guides (6,7) and sliding rollers (5,8) that permit a reciprocal movement of the independent modules (2, 3, 4, 35), that each module has inside a conveyor belt (16, 17, 18) arranged horizontally and also one or more supporting shelves (P) for the supports (32, 33, 34) containing the samples and the components to be analyzed, that the walls of modules (2, 3, 4, 35) supported between each other, present with respect to the conveyors belts (16, 17, 18), openings or passages (21, 22, 23, 24) and that inside each of the modules there is a robot-type arm (10, 11, 12) suitable to grasp and move in a controlled fashion supports (32, 33, 34) containing samples and components.

2. A machine, according to claim 1, **characterized by** the fact that one wall of a module (2,3,4,35) shows on top a grooved sliding wheel (5) and at the bottom a guide (6) consisting of a flat strip and by the fact that each opposite wall of the adjacent module (2, 3, 4, 35) shows on top a guide (7) consisting of a flat strip and at the bottom a grooved sliding wheel (8).

3. A machine, according to claim 1, **characterized by** the fact that each module (2, 3, 4, 35) has inside a robot-type arm (10, 11, 12) and that each robot-type arm is equipped with controllable tongs (13, 14, 15) to grab interchangeable accessories to act on the content of the supports, to grasp, dispense, suck, measure and move and that each robot-type arm (10, 11, 12) can be moved in a controllable fashion in a horizontal plane, in a vertical plane, and that it can also perform controlled rotating movements.

4. A machine, according to claim 1, **characterized by** the fact that the openings (21, 22, 23, 24) made in the side walls of the modules (2, 3, 4, 35) can be closed off using removable doors (19, 20).

5. A machine, according to claim 1, **characterized by** the fact that each conveyor belt (16, 17, 18) is supported by a pair of drive rollers (26, 27, 28, 29, 30, 31) and that always one of the rollers, connected to each belt (16, 17, 18) is hooked up for operation to a controllable drive motor.

6. A machine, according to claim 1, **characterized by** the fact that inside a module (35) shelves (39, 40) are installed vertically, that each shelf (39, 40) can receive containers (32, 33, 34) or plates for samples to be analyzed and that inside the module (35) there is a movable lifting device (41) inside the module (35) there is a movable lifting device (41) that is controlled (f, g) in a vertical plane for the selected lifting of plates or containers off the shelves (39, 40).

7. A machine, according to claim 1, **characterized by** the fact that a module (50) has a chamber (51) for holding spare containers (52, 53, 54) that hold liquids such as thinners, detergents or other substances for treatment.

8. A machine according to claim 1 **characterized by** the fact that the belt (16, 17, 18) of a modular container (2, 3, 4) is located on the same level as the corresponding support shelf (P).
